# EUROPEAN PATENT APPLICATION

(11) **EP 3 045 718 A1**
(43) Date of publication of application: **20.07.2016**
(21) Application number: 15151132.6
(22) Date of filing: 14.01.2015
(51) Int. Cl.: F03B 13/14, F03B 17/06, F03G 7/00, F03G 7/04, F03D 9/00

(54) **Device and process for transforming kinetic energy in electric energy**

(71) Applicant: Ariana, Ali, 1466633644 Theran (IR)
(72) Inventor: Ariana, Ali, 1466633644 Theran (IR)
(74) Representative: BiiP cvba

(57) **Abstract**

A device for transforming kinetic energy from an ambient medium comprising a fluid into electric energy, wherein said ambient medium undergoes pressure variations relative to time and/or space comprised between a maximum pressure value, Pₘₐₓ, and a minimum pressure value, Pₘᵢₙ, said device comprising:
an upstream chamber (1) in fluid communication with an inlet provided with an upstream one way valve (3) bringing said upstream chamber (1) in fluid communication with said ambient medium, said upstream chamber (1) further comprising an outlet (1 a);
a downstream chamber (2) in fluid communication with an inlet (2a) and further comprising an outlet provided with a downstream one way valve (4) bringing said downstream chamber (2) in fluid communication with said ambient medium; and
an energy extracting unit (5) in fluid communication with said upstream chamber (1) and with said downstream chamber (2), comprising an electric generator converting kinetic energy into electric energy.

## Description

### FIELD OF THE INVENTION

The present invention relates to a device for transforming kinetic energy from an ambient medium comprising a fluid into electric energy, wherein said ambient medium undergoes pressure variations relative to time.

### BACKGROUND OF THE INVENTION

Alternative solutions for compensating lack of natural resources such as natural gas, fossil fuel or coal are urgently needed in all segments of the industry. No matter if we are referring to power harvested from sun energy, or power generated from water or wind, efforts are deployed for finding and implementing the optimal solution for assuring the necessities and energy demands of the future.

Since the environmental impact is more and more assessed and restrictions become more drastic, such power harvesting solutions need to be not only efficient and reliable but also environmentally friendly. Such solutions need to not only cover the industrial demands but the domestic demands as well.

As an example of a system harvesting power from water movement, US5179837 describes a method and device for generating energy from the motion of the waves wherein a unit comprises a first member being immersed in or floating on the surface of a body of water, the first member rising and falling with the motion of a wave, and a second member which is submerged and anchored. A fluid is being pressurized due to the movement between the first and the second member and may be used to drive turbines and electric generators. Further, such pressurized fluid is conveyed through a series of units, each unit incrementally increasing the pressure of the fluid. However, a general drawback of this type of system is that, because the device uses the height difference between a relatively still state of the body of water and the height corresponding to the peak of the wave, it fails to use the force generated by the wave under the surface of the body of water, such force having a significantly higher potential in generating a higher amount of energy.

As an example of a system using the potential of the wave under the surface of the body of water, US3989951 introduces a device having an array of subsurface fixed-position flexible-walled pneumatic bags or cells, in a closed cycle system and reacting to surface-wave-correlated static pressure variations by expiring compressed gas into a supply header to a generator-driving pneumatic motor while simultaneously inspiring return gas in a return header from such motor. However, a general drawback is that the system uses the pressure difference created by a wave only within a very short period of time and fails to offer a solution for efficiently extracting energy from the pressure difference created by a wave for the complete cycle of the wave.

Considering the above, it is a first object of the present invention to provide a device able to generate energy from the movement of a fluid within an extended period of time and with increased efficiency, the device being easy to use and having low manufacture and implementation costs.

Another advantage of the present invention is the ability to control the flow of fluid while generating energy, and providing at the same time a clean and waste free source of energy. The device of the present invention proposes a renewable power source suitable for industrial and domestic use, which does not impose any fauna environmental risks.

### SUMMARY OF THE INVENTION

The present invention is directed to a device for transforming kinetic energy from an ambient medium comprising a fluid into electric energy, wherein said ambient medium undergoes pressure variations relative to time between a maximum pressure value, Pmax and a minimum pressure value, Pₘᵢₙ, said device comprising:
(a) An upstream chamber in fluid communication with an inlet provided with an upstream one way valve bringing said upstream chamber in fluid communication with said ambient medium such that said fluid can flow through said upstream one way valve from said ambient medium into said upstream chamber but cannot flow out of said upstream chamber therethrough into ambient medium, said upstream chamber further comprising an outlet,
(b) An downstream chamber in fluid communication with an inlet and further comprising an outlet provided with a downstream one way valve bringing said downstream chamber in fluid communication with said ambient medium such that said fluid can flow out from said downstream chamber into the ambient medium but cannot flow from said ambient medium into said downstream chamber,
(c) An energy extracting unit fluidly connected to the outlet of said upstream chamber and to the inlet of said downstream chamber, comprising an electric generator converting kinetic energy into electric energy from the fluid medium flowing from said upstream chamber to said downstream chamber.

Preferably the upstream chamber comprises a resilient portion suitable for modifying the volume of said upstream chamber such that the volume of the upstream chamber can resiliently increase under the action of a pressure lower than Pmax.

For increasing the efficiency of the device, the upstream chamber is in fluid communication with more than one inlet, each additional inlet comprising an upstream one way valve and/or said downstream chamber is in fluid communication with more than one outlet, each additional outlet comprising a downstream one way valve.

To achieve an easier to build design and to increase the efficiency of the device, the more than one inlet join at a main duct opening to said upstream chamber and/or the more than one outlets join at a main duct opening at said downstream chamber.

Preferably the energy extracting unit comprises a turbine, or a piezoelectric device.

For conferring protection against the ambient medium and for extracting energy more efficiently, the upstream chamber, downstream chamber and energy extracting unit are placed within a shell defined by an outer surface and wherein one or more inlets and one or more outlets are located on said outer surface of the shell. The shell may have a spherical, ovoidal, or elliptical geometry.

Preferably, the volume defined by the shell (6) is in fluid communication with a reference pressure medium at a pressure lower than Pₘᵢₙ, preferably said reference pressure medium being atmospheric air at atmospheric pressure and wherein the fluid in the ambient medium is preferably liquid, more preferably water.

It is advantageous if the upstream chamber is connected to more than one inlet and/or the downstream chamber is connected to more than one outlet, that the one way valves coupled to said more than one inlets and outlets be homogenously distributed spatially. If the device is provided with a shell, the one way valves may be distributed over the whole outer surface of said shell.

If the device comprises a shell, the upstream chamber may be defined by an inner volume of said shell, with the downstream chamber fluidly sealed from the upstream chamber except through said energy extracting unit.

Preferably, the device is connected to a buoyancy system or fixing system capable of keeping said device in a relatively stable and fixed position within the ambient medium.

The present invention is further directed to a process for transforming kinetic energy from an ambient medium comprising a fluid into electric energy, said process comprising the step of positioning a device according to the present invention within an ambient medium comprising a fluid and undergoing pressure variations relative to time between a maximum pressure value Pmax and a minimum pressure value Pₘᵢₙ.

Preferably the process comprises the following steps:
(a) When the pressure, Pamb,3, in the ambient medium at the level of the inlet of the upstream chamber is greater than the pressure Pu in the upstream chamber fluid is allowed to flow from the ambient medium into the upstream chamber through the upstream one way valve
(b) When the pressure Pu in the upstream chamber is greater than the pressure Pd in the downstream chamber fluid is allowed to flow from the upstream chamber to the downstream chamber through the energy generating unit
(c) When the pressure Pd in the downstream chamber is greater than the pressure Pamb,4 in the ambient medium at the level of the outlet of the downstream chamber fluid is allowed to flow from the downstream chamber into the ambient medium.

Preferably, the upstream chamber comprises a resilient portion suitable for being stretched from a unstretched configuration to a stretched configuration defining a volume greater than the unstretched configuration under the action of a pressure lower than Pmax, said process further comprising the steps of:
(a) As fluid flows into the upstream chamber stretching the resilient portion towards its stretched configuration, thus increasing the volume of the upstream chamber;
(b) When the pressure Pamb,3 of the ambient medium at the level of the inlet of the upstream chamber falls below the pressure Pu in the upstream chamber, allowing the resilient portion to return to its unstreatched configuration and thus further driving fluid through the energy extracting unit into the downstream chamber

The present invention is further directed to a use of the device for one of the following:
(a) Transforming kinetic energy from one of the following: ocean, or marine or river or lake water, into electric energy;
(b) Transforming kinetic energy from the flow of air into electric energy;
(c) Transforming kinetic energy from the flow of industrial water, chemical sewage or conventional sewage into electric energy;
(d) Transforming kinetic energy from the movements of a fluid exposed to a source of accelerations and/or vibrations, such as when stored in a moving vehicle, such as a lorry.

### BRIEF DESCRIPTION OF THE DRAWINGS

FIG 1 schematically represents a system according to two embodiments of the present invention;
FIG 2 schematically represents a system according to another embodiment of the present invention;
FIG 3 schematically represents a system according to another embodiment of the present invention;
FIG 4 schematically represents a system according to another embodiment of the present invention;
FIG 5 schematically represents the pressure and energy diagram characterizing a system according to the embodiment of Figure 1(a);
FIG 6 schematically represents the pressure and energy diagram characterizing a system according to the embodiment of Figure 1(b).
FIG 7 schematically represents the flow direction as a function of time of a device according to Fig.3 or 4, immersed in a medium undergoing pressure variations in time and space.

### DESCRIPTION OF THE INVENTION

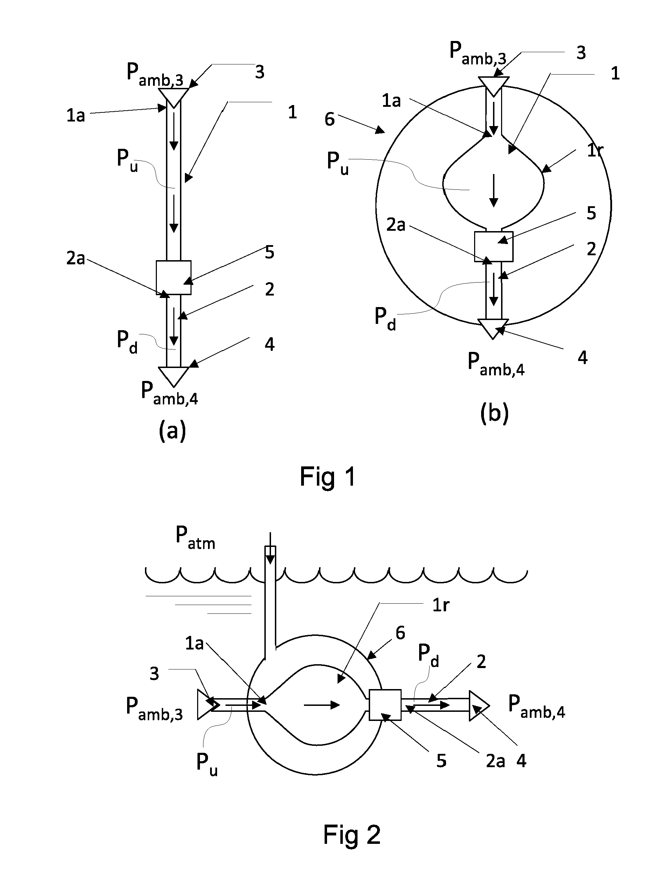

As shown in FIG 1(a), the present invention concerns a device for transforming kinetic energy from an ambient medium comprising a fluid into electric energy, wherein said ambient medium undergoes pressure variations relative to time and/or space comprised between a maximum pressure value Pmax and a minimum pressure value Pₘᵢₙ. A device according to the present invention comprises:

An upstream chamber (1) in fluid communication with an inlet provided with an upstream one way valve (3) bringing said upstream chamber (1) in fluid communication with said ambient medium. Fluid is allowed to flow through the upstream one way valve (3) from said ambient medium into said upstream chamber (1) but cannot flow out of the upstream chamber (1) into the ambient medium therethrough. Said upstream chamber (1) further comprises an outlet (1 a),

A downstream chamber (2) in fluid communication with an inlet (2a) and further comprising an outlet provided with a downstream one way valve (4) bringing said downstream chamber (2) in fluid communication with said ambient medium. Fluid can thus flow out from said downstream chamber (2) into the ambient medium but cannot flow from said ambient medium into said downstream chamber (2) through said upstream one way valve (3),

An energy extracting unit (5) fluidly connected to the outlet (1a) of said upstream chamber (1) and to the inlet (2a) of said downstream chamber (2). It comprises an electric generator converting kinetic energy into electric energy from the fluid medium flowing from said upstream chamber (1) to said downstream chamber (2) through said energy extracting unit (5).

It is to be understood that the definition of the chambers and one way valves as "upstream" and respectively "downstream" refers to their positions with respect to the energy extracting unit (5) following the flow direction from the upstream one way valve (3) to the downstream one way valve (4).

The efficiency of the device is significantly increased due to the presence of the upstream and downstream one way valves (4) since, once the ambient medium experiences an increase in pressure, P_{amb,3}, at the level of the upstream one way valve (3) in comparison with the pressure, Pᵤ, within the upstream chamber (1), fluid will flow into the upstream chamber (1). This flow continues as long as there is a pressure difference, □Pᵤ = Pᵤ - P_{amb,3}, between the ambient medium pressure, Pamb,3, at the level of the upstream one way valve (3) and the pressure, Pu, in the upstream chamber (1). When the pressure, Pu, inside the upstream chamber (1) is equal or higher than the pressure, P_{amb,3}, of the ambient medium at the level of the upstream one way valve (3), no more fluid flows through the upstream one way valve (3). No fluid flows from ambient medium into the upstream chamber (1) because with □Pᵤ ≤ 0, there can be no flow in said direction and no fluid flows out of the upstream chamber (1) into ambient environment, because the upstream one way valve (3) impedes it.

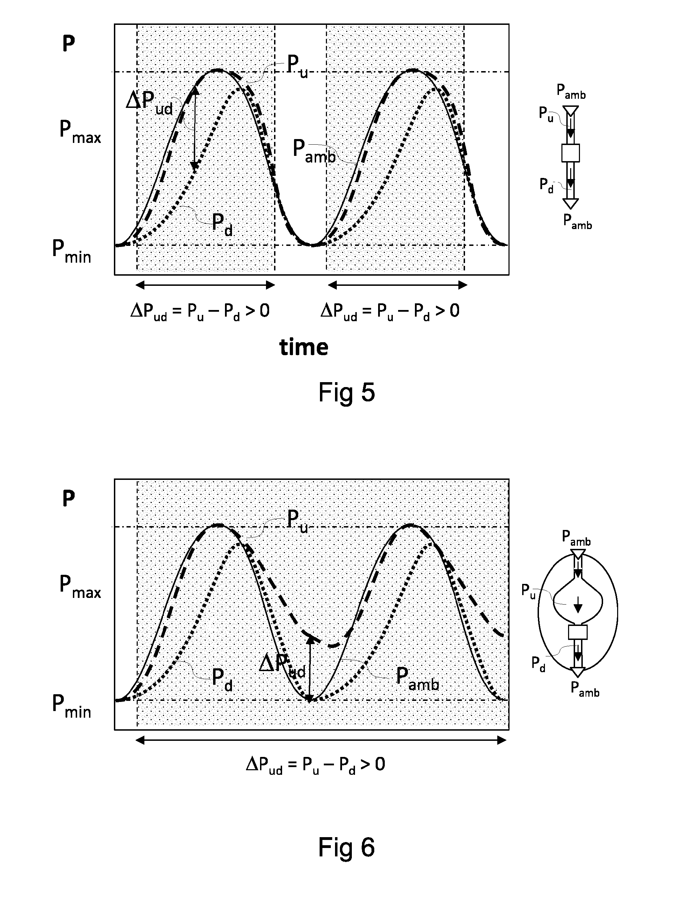

At the same time, as long as the pressure, Pᵤ, in the upstream chamber (1) is greater than the pressure, P_{d}, in the downstream chamber (2) fluid will flow from the upstream chamber (1) into the downstream chamber (2) through the energy extracting unit (5). The device can generate energy only during the time when the pressure difference, ΔP_{ud} = Pᵤ - P_{d} > 0 as illustrated by the shaded areas in FIG.5&6. If the pressure, P_{amb,4}, in the ambient environment at the level of the downstream one way valve (4) is higher than the pressure, P_{d}, in the downstream chamber (2), no fluid will flow through the downstream one way valve (4) (no fluid flows into the downstream chamber because of the downstream one way valve, and no fluid flows into the ambient medium because of the negative pressure difference, ΔP_{d} = P_{amb,3}-P_{d}). With such situation, the pressure, P_{d}, rapidly grows and equalizes the pressure, Pᵤ, in the upstream chamber, thus interrupting any fluid flow through the energy extracting unit (5). If the pressures, P_{amb,3} and P_{amb,4}, of the ambient medium, were constant in time, all pressures would rapidly balance, a fluid would rapidly stop flowing in, out or through the device.

The device of the present invention must be used in an ambient medium undergoing pressure variations in time, and preferably though not necessarily also in location. In FIG.5&6, a sinusoidal time variation of the pressure is represented, but with no local pressure variation (i.e., P_{amb,3} = P_{amb,4}). It is clear that the pressure may vary with time in any manner and also from one point to the other of the ambient medium (i.e., P_{amb,3} ≠ P_{amb,4}). When the pressure, P_{amb,4}, of the ambient medium at the level of the downstream one way valve drops below the pressure, P_{d}, in the downstream chamber (2), fluid can flow out of the downstream chamber into the ambient medium, thus resuming the flow of fluid from the upstream chamber (1) through the energy extracting unit (5) into the downstream chamber (2) and out thereof. As the pressure, P_{amb,3}, in the ambient medium at the level of the upstream chamber (1) falls below the pressure, Pᵤ, in the upstream chamber, fluid can flow into the upstream chamber again, raising the pressure, Pᵤ, and the cycle may start again.

The energy extracting unit (5) transforming kinetic energy from the flow of the fluid from the upstream chamber (1) into the downstream chamber (2) into electric energy, therefore does not necessarily function permanently, but may function intermittently, depending on the value of ΔP_{ud} = Pᵤ - P_{d}, which depends on the time variations of the pressure in the ambient medium and on the design of the device. The dimensioning of the device will depend on the frequency of the pressure variations in the ambient medium so as to minimize the time intervals during which no fluid flows through the energy extracting unit (5). Optimally, the device is dimensioned such as to create a continuous flow through the energy extracting unit (5).Further the device according to the present invention can be used in a high range of fluid media, having different densities. Such a device can also be moved from one type of fluid medium to another without any required structural changes. A preferred fluid medium is water or an air based medium but it is to be understood that the device according to the present invention is efficient in other fluid mediums as well.

In the context of the present invention the upstream chamber (1) and the downstream chambers (2) can be in the form of a duct or can have a particular shape selected from a group comprising: spherical, cubical, parallelepipedal, conical, ovoid, or different undefined 3D shapes, and/or combinations thereof.

Energy can be transported away from the energy extracting unit (5) to a second location with a cable for transporting the generated electrical energy.

In a preferred embodiment of the present invention illustrated in FIG 1(b), 2 and 3, the upstream chamber (1) comprises a resilient portion (1r) suitable for modifying the volume of said upstream chamber (1) such that the volume of the upstream chamber (1) can resiliently increase under the action of a pressure lower than Pₘₐₓ. The efficiency of the device is significantly increased since the resilient portion acts like a buffer functioning as follows.

Assuming a locally homogeneous pressure, P_{amb} = P_{amb,3} = P_{amb,4}, in the ambient medium surrounding the device, fluid penetrates into the upstream chamber (1) when the ambient medium pressure, P_{amb}, is higher than the pressure, Pᵤ, in the upstream chamber, and flows through the upstream chamber and the energy extracting unit (5) to penetrate into the downstream chamber, thus increasing the pressure, P_{d}, therein. If the pressure, P_{d}, in the downstream chamber is higher than the ambient medium pressure, Pamb, fluid flows through the device actuating the energy extracting unit without substantially deforming the resilient portion of the upstream chamber. If, on the other hand, the pressure, P_{d}, in the downstream chamber is lower than the pressure, P_{amb}, the former will rapidly build up and level with the pressure, Pᵤ, and the flow from upstream to downstream chambers will cease. In this situation and as shown in FIG.5, absent a resilient portion in the upstream chamber, the pressures, Pᵤ, P_{d}, will rapidly level with the decreasing ambient medium pressure, Pamb, with no more fluid flowing through the device. On the other hand, if the upstream chamber (1) comprises a resilient portion (1 r), part of the maximum pressure, Pmax, available from the ambient medium is reversibly stored in the upstream chamber by the deformation of the resilient material. As shown in FIG.6, the energy stored by the deformation of the resilient portion is released as the latter gradually returns to its unstretched geometry, when the ambient medium pressure, Pamb, lowers allowing fluid to flow out of the downstream chamber (2). A longer, even continuous, actuation of the energy extracting unit is thus possible.

If such a device is submersed in marine, ocean or river water, having fluctuations of current or waves, energy will be generated continuously: when a wave will be within its high energy interval (the peak amplitude of the wave) and as long as the resilient portion of the upstream chamber (1) allows an increase of volume, the upstream one way valve (3) allows water to enter in the upstream chamber (1). Once the wave is within its low energy interval, Pₘᵢₙ, or as soon as the pressure, P_{amb,4}, of the ambient medium at the level of the downstream one way valve (4) is lower than the pressure, P_{d}, of the downstream chamber (2), the water from the downstream chamber (2) flows out into the ambient medium. Immediately after or even during such process another high energy interval of another wave is reached and the cycle is repeated.

In yet another advantageous embodiment according to the present invention, the downstream chamber (2) comprises a resilient portion (2r) suitable for modifying the volume of said downstream chamber (2) such that the volume of the downstream chamber (2) can resiliently increase under the action of a pressure lower than Pₘₐₓ (cf. FIG 1(b)&6). Both upstream and downstream chambers may comprise such a resilient portion (not illustrated). In such situation, the downstream chamber (2) is also acting as a buffer, allowing for a larger quantity of fluid from the ambient medium to flow into the device, as the pressures, Pᵤ, P_{d}, inside the device slowly increase as long as both upstream and downstream chambers (2) allow an increase in volume. Once the pressure, P_{amb,4}, of the ambient medium at the level of the downstream one way valve (4) is lower than the pressure value of the downstream chamber (2), fluid from the downstream chamber (2) can flows into the ambient medium for a longer time as the resilient portion releases the energy by returning to its unstretched geometry. At the same time, pressure equalization between the pressures, Pᵤ, P_{d}, in the upstream and downstream chambers (1, 2) can take place within the device for a longer time as the resilient portions of the upstream and downstream chambers progressively return to their unstretched geometries thus releasing energy to drive the flow of fluid from the upstream chamber (1) into the downstream chamber (2) and further into the ambient medium. Said flow of fluid continues until the pressure, Pamb,4, in the ambient medium at the level of the downstream one way valve (4) is lower or equal to the pressure, P_{d}, in the downstream chamber (2). Such a structural characteristic increases the efficiency of the device even more by storing a larger quantity of fluid and reversibly storing energy by stretching of the resilient portion, which can be gradually released to drive fluid flow through the energy extracting unit and therefore generating electric energy for a longer period of time.

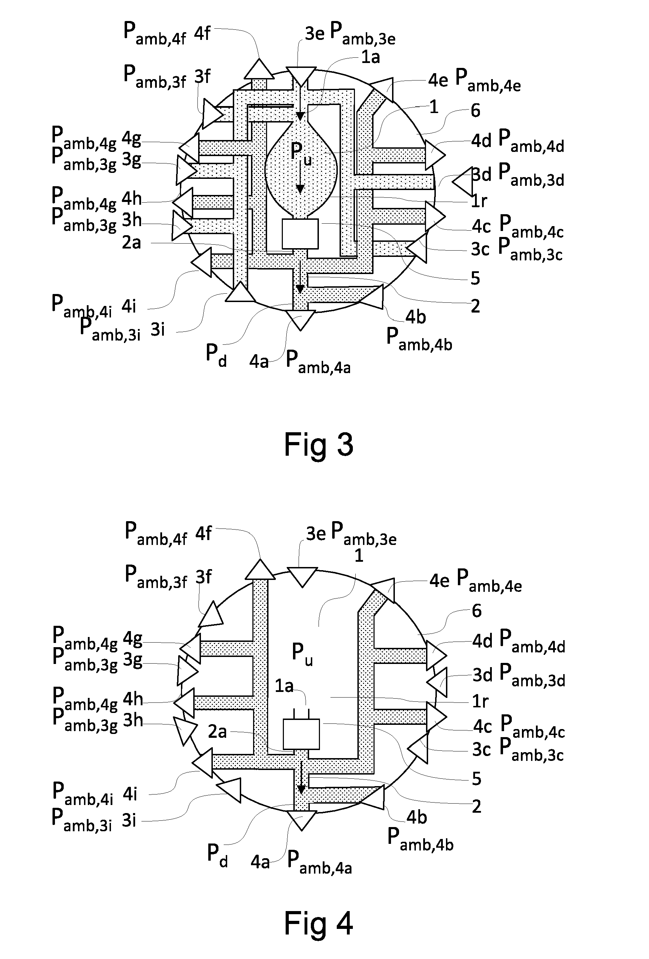

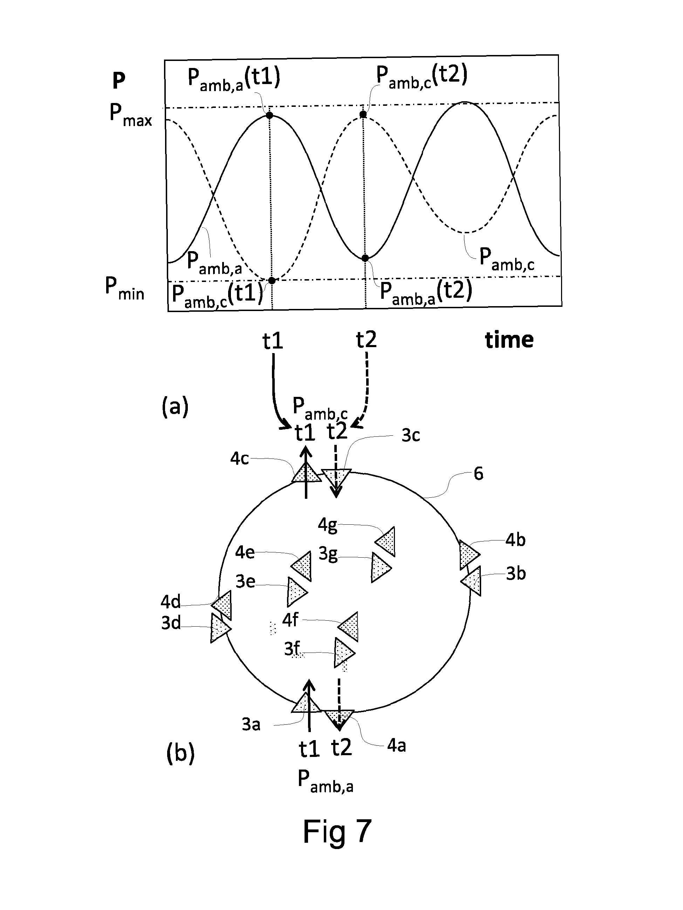

In another embodiment according to the present invention, as illustrated in FIG.3, 4&6 the upstream chamber (1) is in fluid communication with more than one inlet, each additional inlet comprising an upstream one way valve (3a-3i) and/or said downstream chamber (2) is in fluid communication with more than one outlet, each additional outlet comprising a downstream one way valve (4a-4i). Such a structural characteristic is particularly advantageous in case, beside time variations, the pressure, P_{amb}, in the ambient medium undergoes also local variations, as it allows the device, on the one hand, to receive a flow of liquid from different directions as soon as there is a locally higher pressure, P_{amb,3a}-P_{amb,3i}, value at the level of at least one of the upstream one way valves (3a-3i) compared with the pressure, Pᵤ, in the upstream chamber (1) and, on the other hand, to release fluid from the downstream chamber (2) through one of the downstream one way valves (4a-4i) as the pressure, P_{amb,4a}-P_{amb,4i}, locally drops below P_{d}. This situation is illustrated in FIG.7, showing the pressure variations, P_{amb,a} & P_{amb,c}, with time undergone by the ambient medium at two distinct locations of the outer surface of a shell (6) (the presence of the shell is not mandatory if the upstream or downstream chambers do not comprise any resilient portion). When the pressure, P_{amb,a}, is locally high at the location of an upstream one way valve (3a), fluid can flow into the upstream chamber (1) through said upstream one way valve (3a), and can flow out through a downstream one-way valve (4c) at a location wherein the pressure, P_{amb,c}, is locally low. If with time the pressures, P_{amb,a} & P_{amb,c}, locally get closer to 0, fluid can flow in and out of the device through other one way valves (3a-I, 4a,i) wherein the pressures are locally higher or lower.

In order to simplify the structural and physical design with respect to the connection between the more than one inlets and the upstream chamber (1) and/or between the downstream chamber (2) and the more than one outlets, the more than one inlets join into a main duct opening to said upstream chamber (1) and/or the more than one outlets may join at a main duct opening at said downstream chamber (2).

Alternatively, as illustrated in Figure 4, several upstream one way valves may be distributed over the area of a shell (6) bringing in fluid communication the external medium with an inner volume of the shell (6) forming the upstream chamber (1The energy extracting unit (5) is located within said inner volume of the shell, with an upstream opening (1a) fluidly communicating with the inner volume of the shell, and a second opening (2a) in fluid communication with a downstream chamber (2) in fluid communication with several downstream outlets (4a-4i) distributed over the area of outer surface of the shell. The downstream chamber (2) is in fluid communication with the upstream chamber (1) formed by the inner volume of the shell (6) through the energy extracting unit (6). With this configuration, no piping is required to fluidly communicate the several upstream one way valves (3a-3i) to the upstream chamber (1). The inner volume of the shell is always at the highest pressure of the ambient medium at the level of the upstream one way valves.

It is clear that the inner volume of the shell can form the downstream chamber (2) and the upstream chamber is fluidly linked to the several upstream one way valve through tubing (this embodiment is not illustrated in the Figures, but can be deducted quite easily from FIG.4, by simply inverting the orientations of the upstream and downstream one way valves). This embodiment allows the use of a resilient portion of the upstream chamber (1) which is always at a higher pressure than the inner volume of the shell, which Is always at the lowest pressure of the ambient medium at the level of the downstream one way valves.

Preferably, the energy extracting unit (5) comprises a turbine or a piezoelectric device or any other kinetic device, in direct communication with the energy generator, which converts the movement of the turbine, or the applied pressure on the piezoelectric device or of the movement of the kinetic device element into electric energy.

Preferably, as illustrated in FIG 2 or FIG 3 or FIG 4, the resilient portion of the upstream chamber (1) and/or of the downstream chamber (2) is/are enclosed within a shell (6) impervious to the fluid of said ambient medium and comprising an outer surface defining an inner volume maintained at a pressure lower than Pmin. Such shell (6) is advantageous as it isolates the resilient portion of the upstream and/or downstream chambers from the ambient medium. The device can thus function more efficiently, as illustrated in FIG 6, allowing the resilient portions of the device chambers (1, 2) to freely stretch and unstretch without any influence of the ambient medium. The shell (6) can be manufactured from any material suitable for the purpose, and preferably selected from the group comprising: thermoplastic or thermosetting polymer, natural or synthetic rubber, metal, and or combinations thereof. Of course it is preferred that the shell (6) be not substantially deformable by the ambient medium pressure, P_{amb}.

Preferably, as illustrated in FIG 4, the upstream chamber (1), downstream chamber (2), and energy extracting unit (5) are enclosed within said shell (6) defined by an outer surface and wherein one or more inlets and one or more outlets are located on said outer surface of the shell (6). Accordingly, when the device is placed within a fluid, no matter where the pressure variation takes place with respect to the outer surface of the shell (6), the stretching and unstretching of the resilient portions of the upstream and downstream chamber can proceed without influence of the ambient medium pressure directly on the resilient material. In a preferred embodiment illustrated in FIG 2, the inner volume defined within the shell (6) is in fluid communication with a reference pressure medium at a pressure lower than Pₘᵢₙ. Said reference pressure medium can be atmospheric air at atmospheric pressure. The fluid in the ambient medium is preferably liquid, more preferably water. This solution allows an easy control of the pressure reigning within the shell, as in many applications, it could be technically difficult to maintain an inner pressure lower than the ambient pressure, P_{amb}, for a long time without leaks. The outside surfaces of the resilient portions of the upstream and/or downstream chambers are therefore constantly maintained at atmospheric pressure, or at any other reference pressure. In an alternative embodiment, the shell may not impervious to the fluid in the ambient medium. In this case the shell has a protective function against possible impacts and is preferably in the form of a grid or a mesh adapted to intercept and retain any particulate matter which could impact the device and damage it.

In an embodiment according to the present invention the upstream chamber (1) is in fluid communication with a plurality of inlets, each inlet comprising an upstream one way valve (3a, 3b), said inlets being distributed over the entire surface of the shell (6). Further, the downstream chamber (2) is in fluid communication with a plurality of outlets, each outlet comprising a downstream one way valve (4a, 4b), said outlets being likely distributed over the entire surface of the shell (6). The number of inlets is preferably but not necessarily equal to the number of outlets. Such embodiment is particularly advantageous in case the ambient medium undergoes both time and space variations of pressures, e.g., in a medium comprising varying currents. Depending, on the one hand, on the directions of the currents of, and pressures distribution in the fluid medium and, on the other hand, on the shape and position of the device within the ambient medium, a locally positive pressure difference, □Pu, between ambient medium and upstream chamber will drive fluid flow from the ambient medium into the upstream chamber. Similarly, a locally positive pressure difference, P_{d}, between downstream chamber and the ambient medium will drive fluid flow out of the downstream chamber into the ambient medium. This way, the energy extracting unit can be (quasi-)continuously activated even if the pressures in the ambient medium vary locally modifying the directions of the pressure gradients within said ambient medium. Accordingly, the device will have areas on the surface of the shell (6) with locally high ambient medium pressure values, Pamb,3a, at the level of the an upstream one way valve (3a), such that fluid can flow therethrough into the upstream chamber (1), and other areas with low pressure values, Pamb,4a, at the level of the a downstream one way valve (4a), such that fluid can flow therethrough out of the downstream chamber (1) into the ambient medium.

Preferably said device is connected to a buoyancy system capable of keeping said device in a relatively stable and fixed position within the ambient medium, not allowing the device to adopt a rotational movement because of the direction of the flow of the fluid medium or be moved together with the fluid medium.

Preferably, the the maximum distance between two one-way valves is comprised between 10 µm and 10,000 m. Because of such a range, the device according to the present invention can generate energy from the smallest pressure variation such as vibrations of small intensity, to the largest pressure variations such as powerful water or air currents, or even waterfalls. It can equally apply to fluids flowing in capillaries of micrometric dimensions, or to large scale applications, such as with sea currents.

The present invention also concerns a process for transforming kinetic energy from an ambient medium comprising a fluid into electric energy, said process comprising the step of positioning a device according to the present invention within an ambient medium comprising a fluid and undergoing pressure variations relative to time between a maximum pressure value Pmax and a minimum pressure value Pₘᵢₙ.

Preferably such a process comprises the following steps:
(a) When the pressure Pamb,3 in the ambient medium at the level of the inlet of the upstream chamber (1) is greater than the pressure, Pᵤ, in the upstream chamber (1) fluid is allowed to flow from the ambient medium into the upstream chamber (1) through the upstream one way valve (3)
(b) When the pressure, Pu, in the upstream chamber (1) is greater than the pressure, P_{d}, in the downstream chamber (2) fluid is allowed to flow from the upstream chamber (1) to the downstream chamber (2) through the energy generating unit
(c) When the pressure P_{d}, in the downstream chamber (2) is greater than the pressure P_{amb,4} in the ambient medium at the level of the outlet of the downstream chamber (2) fluid is allowed to flow from the downstream chamber (2) into the ambient medium.

Preferably the upstream chamber (1) comprises a resilient portion suitable for being stretched from a unstretched configuration to a stretched configuration defining a volume greater than the unstretched configuration under the action of a pressure lower than Pmax, said process further comprising the steps of:

As fluid flows into the upstream chamber (1) stretching the resilient portion towards its stretched configuration, thus increasing the volume of the upstream chamber (1);

When the pressure, P_{amb,3}, of the ambient medium at the level of the inlet of the upstream chamber (1) falls below the pressure, P_{d}, in the upstream chamber (1), allowing the resilient portion to return to its unstreatched configuration and thus further driving fluid through the energy extracting unit (5) into the downstream chamber (2) as long as the pressure, P_{d}, in the downstream chamber is lower than in the upstream chamber, P_{d},< Pᵤ,

As discussed supra, this embodiment s advantageous in that the device is efficiently generating energy when the pressure P_{amb,3} is higher than the pressure Pamb,4 but also when the ambient medium reaches a state in which the ambient pressures P_{amb,3}, P_{amb,4}, are both lower than the pressures, Pu, Pd, withing the device, as long as P_{d} > P_{amb,4}. This characteristic offers a significant advantage over known systems such as hydroelectric turbines, which are able to extract electric energy from kinetic energy only if fluid is flowing in a particular defined direction and only if there is a positive pressure gradient in the abient fluid medium upstream to downstream of turbine.

The present invention also concerns a use of a device as defined above for one of the following activities:
(a) Transforming kinetic energy from one of the following: ocean, or marine or river or lake water, into electric energy;
(b) Transforming kinetic energy from the flow of air into electric energy;
(c) Transforming kinetic energy from the flow of industrial water, chemical sewage or conventional sewage into electric energy;
(d) Transforming kinetic energy from the movements of a fluid exposed to a source of accelerations and/or vibrations, such as when stored in a moving vehicle, such as a lorry.

By having such a large range of application possibilities the device according to the present invention is suitable for use in multiple locations without having any conceptual changes. Further, any flow of fluid can be used in generating electric energy, which offers an additional, very important benefit over prior art devices, which are bound by the parameters of the particular fluid medium.

### Example of device extracting energy from waves or water currents:

A device according to the present invention is submersed in marine or ocean water, placed at a certain distance from the shore, preferably out of people's reach. The device can either be attached to a specially created buoyancy system that can be anchored at the bottom of the water and/or to specially built pillars or dams. Another possibility is to secure the device to the signaling buoy system found at a certain distance from the coast and along the coast line.

The device can be submersed at different depths from the surface of the water. If such a device is submersed within the first couple of meters from the surface (half of the length measured between two consecutive wave peak amplitudes), where the wave is generating a significant water motion, the device according to the present invention transforms the pressure generated by the waves into electric energy.

If the device is submersed at a bigger depth, the device according to the present invention transforms the pressure generated by marine or ocean currents into electric energy.

Furthermore, for generating more energy from marine or ocean waves or currents, a web structure acting as a buoyancy system can be manufactured and a plurality of devices according to the present invention connected thereto. Accordingly, the efficiency of energy generation will be increased. If such a system is submersed in the first couple of meters from the surface of the water (half of the length measured between two consecutive wave peak amplitudes), the system can be used not only for generating energy but also for breaking the waves, protecting the shore from the damaging power of water.

Each of the devices has an external wire transporting the generated energy to a second location.

### Example of device extracting energy from the movement of the water from a river:

A device according to the present invention is submerged in the water of a river either as an individual device anchored through a buoyancy system or as a plurality of devices mounted on a web structure acting as a buoyancy system. Each of the devices has a wire transporting the energy generated to a second location like a generator of a house or a power plant providing energy for an industrial plant or for a plurality of houses or buildings.

Because of the continuous flow of water, the device or the plurality of devices will continuously generate energy, making the device a reliable source of energy for public use or industrial use and completely replacing conventional energy sources.

Furthermore, in the vicinity of a bridge or a river turn, it is commonly found that the bottom of the river is purposely modified by people in the form of steps, in order to reduce the force of the water and prevent damages. The water falls from one step to another and loses part of its energy. The device or plurality of devices according to the present invention can be placed in the vicinity of such steps and generate energy from the fall of the water.

Still a further example is: a web structure acting as a buoyancy system and having a plurality of devices according to the present invention mounted thereon, such devices relatively covering the entire surface of the buoyancy system. Such structure can be used for creating a dam type of structure on the course of a river and still generate energy from the movement of water.

### Example of generating energy from the movement of liquid:

Still a further possibility is to submerge a device or a plurality of devices as described herein in a recipient containing a liquid and place such device in the proximity of a highway or a bridge. As cars pass on said highway or bridge next to the device, vibrations are created and transmitted to the liquid. The movement of the liquid is used by the device or plurality of devices to generate energy, which can be further used for charging batteries or for public lighting or different signaling systems along the road.

### Example: Industrial water or sewage

A device or a plurality of devices as described herein is/are mounted on the evacuation channel of industrial water or sewage on a buoyancy system anchored accordingly. Once industrial water or sewage is evacuated, the device or plurality of devices will generate energy which can be transported and used within the plant or for other purposes (domestic use or public lighting).

### Example of devices generating energy from the movement of air:

A device or a web system comprising a plurality of devices as described herein and of reduced dimension can be mounted on the body of an electric car and generate energy when the car is moving or if the wind is blowing. The generated energy is used for charging the battery of the electric car.

A further possibility is to mount a device or a plurality of devices according to the present invention on clothing or accessories elements such as jackets, hats or helmets worn by people, such as when people are walking or are using a bike or a motorcycle, the device or the plurality of devices generate energy, which can be used by a system for charging a mobile phone or a portable computer.

A further possibility is to place a device or a plurality of devices on a stable structure in the vicinity of a highway or a bridge, such that when cars are passing by or when the wind is blowing, the displaced air is used for generating energy. The generated energy can be used for charging batteries or for public lighting or different signaling systems along the road.

Still a further possibility is to mount a device or a plurality of devices as described herein on a structure, said structure being fixed within an area undergoing a movement of air, or moved from one location to another. The energy generated by the movement of air or by the movement of such structure is further used for charging batteries or for other systems (if the structure is fixed). Such a structure can be for example a zeppelin and the energy generated can be used on electrical devices within the zeppelin or for charging batteries and later use.

The following table lists the reference numbers and abbreviations used in figures and in the text:

| Ref. | Description |
|---|---|
| 1 | upstream chamber (1) |
| 1a | outlet (of the upstream chamber (1) |
| 1r | resilient portion of the upstream chamber (1) |
| 2 | downstream chamber |
| 2a | inlet of the downstream (2) |
| 2r | resilient portion of the downstream chamber (2) |
| 3 | upstream one way valve |
| 3a-i | different upstream one way valves |
| 4 | downstream one way valve |
| 4a-i | different downstream one way valves |
| 5 | energy extracting unit (5) |
| 6 | shell impervious to fluid in ambient medium |
| P_{amb} | pressure in the ambient medium |
| P_{amb.3} | pressure in the ambient medium at the level of an upstream one way valve (3) |
| P_{amb,a} | pressure in the ambient medium at the level of a one way valve (3a, 4a) |
| P_{amb.c} | pressure in the ambient medium at the level of a one way valve (3c, 4c) |
| P_{amb,3a-i} | pressure in the ambient medium at the level of the upstream one way valve (3a-i) |
| P_{amb,4} | pressure in the ambient medium at the level of the downstream one way valve (4) |
| P_{amb,4a-i} | pressure in the ambient medium at the level of the downstream one way valve (4a-i) |
| ΔP_{d} | = P_{amb,3} - Pu |
| □Pᵤ | = P_{d} - P_{amb,4} |
| ΔP_{ud} | = Pᵤ - P_{d} |

## Claims

1. A device for transforming kinetic energy from an ambient medium comprising a fluid into electric energy, wherein said ambient medium undergoes pressure variations relative to time and/or space comprised between a maximum pressure value, Pₘₐₓ, and a minimum pressure value, Pₘᵢₙ, said device comprising:
(a) An upstream chamber (1) in fluid communication with an inlet provided with an upstream one way valve (3) bringing said upstream chamber (1) in fluid communication with said ambient medium such that said fluid can flow through said upstream one way valve from said ambient medium into said upstream chamber (1) but cannot flow out of said upstream chamber therethrough into ambient medium, said upstream chamber (1) further comprising an outlet (1a),
(b) An downstream chamber (2) in fluid communication with an inlet (2a) and further comprising an outlet provided with a downstream one way valve (4) bringing said downstream chamber (2) in fluid communication with said ambient medium such that said fluid can flow out from said downstream chamber (2) into the ambient medium but cannot flow from said ambient medium into said downstream chamber (2),
(c) An energy extracting unit (5) in fluid communication with said upstream chamber (1) and with said downstream chamber (2), comprising an electric generator converting kinetic energy into electric energy from the fluid medium flowing from said upstream chamber (1) to said downstream chamber (2).

2. A device according to claim 1, wherein the upstream chamber (1) is in fluid communication with more than one inlet, each additional inlet comprising an upstream one way valve (3a-3i) and/or said downstream chamber (2) is in fluid communication with more than one outlet, each additional outlet comprising a downstream one way valve (4a-4i).

3. A device according to claim 2 wherein the more than one inlets join into a main duct opening to said upstream chamber (1) and/or the more than one outlets join at a main duct opening at said downstream chamber (2).

4. A device according to any of the preceding claims, wherein the upstream chamber (1) and the downstream chamber (2) are enclosed within a shell (6) defined by an outer surface, said shell (6) being impervious to the fluid of said ambient medium and wherein the one way valves (3, 4) of the one or more inlets and one or more outlets to the upstream and downstream chambers (1,2), respectively, are located on said outer surface of the shell (6).

5. A device according to claims 2 or 3, and 4, wherein the one way-valves (3, 4) of the more than one inlets to the upstream chamber (1) and of the more than one outlets of the downstream chamber (2) are homogenously distributed over the whole outer surface of the shell (6).

6. A device according to claim 4 or 5 wherein an inner volume defined by the shell (6) is in fluid communication with a reference pressure medium at a pressure lower than Pₘᵢₙ, preferably said reference pressure medium being atmospheric air at atmospheric pressure and wherein the fluid in the ambient medium is preferably liquid, more preferably water.

7. A device according to claim 4 or 5, wherein the upstream chamber (1) is defined by an inner volume of the shell (6), and wherein the downstream chamber (2) is fluidly sealed from the upstream chamber (1) except through said energy extracting unit (5).

8. A device according to claims 4 or 5, and 7, wherein an inner volume of the shell is at a pressure lower than Pₘᵢₙ, and wherein the upstream chamber (1) comprised within said inner volume comprises a resilient portion (1r) suitable for being stretched and thus modifying the volume of said upstream chamber (1) such that the volume of the upstream chamber (1) can resiliently increase under the action of a pressure lower than Pₘₐₓ.

9. A device according to any of the preceding claims, wherein the energy extracting unit (5) comprises a turbine, or a piezoelectric device.

10. A device according to any of the preceding claims, wherein said device is connected to a fixing system capable of keeping said device in a relatively stable and fixed position within the ambient medium.

11. A device according to claim 1, wherein the maximum distance between two one-way valves is comprised between 10 µm and 10,000 m.

12. A process for transforming kinetic energy from an ambient medium comprising a fluid into electric energy, said process comprising the step of positioning a device according to any of the preceding claims within an ambient medium comprising a fluid undergoing pressure variations relative to time and/or space comprised between a maximum pressure value Pₘₐₓ and a minimum pressure value Pₘᵢₙ

13. A process according to the preceding claim wherein
(a) When the pressure, P_{amb,3}, in the ambient medium at the level of an inlet of the upstream chamber (1) is greater than the pressure, Pᵤ, in the upstream chamber (1) fluid is allowed to flow from the ambient medium into the upstream chamber (1) through the upstream one way-valve (3a-3i) of said inlet;
(b) When the pressure, Pᵤ, in the upstream chamber (1) is greater than the pressure, P_{d}, in the downstream chamber (2) fluid is allowed to flow from the upstream chamber (1) to the downstream chamber (2) through the energy generating unit, thus generating electric energy;
(c) When the pressure, P_{d}, in the downstream chamber (2) is greater than the pressure, P_{amb,4}, in the ambient medium at the level of an outlet of the downstream chamber (2) fluid is allowed to flow from the downstream chamber (2) into the ambient medium through the one-way valve (4a-4i) of said outlet.

14. A process according to claims 12 or 13 wherein the device is according to claim 8, said process further comprising the steps of:
(a) As fluid flows into the upstream chamber (1), allowing the resilient portion to stretch thus increasing the volume of the upstream chamber (1);
(b) When the pressure, P_{amb,3}, of the ambient medium at the level of the inlet of the upstream chamber (1) falls below the pressure, Pᵤ, in the upstream chamber (1), allowing the resilient portion to contract, thus reducing the volume of the upstream chamber (1) and further driving fluid through the energy extracting unit (5) into the downstream chamber (2)

15. A use of the device according to claims 1 to 11 for one of the following:
(a) Transforming kinetic energy from one of the following: ocean, or marine or river or lake water, into electric energy;
(b) Transforming kinetic energy from the flow of air into electric energy;
(c) Transforming kinetic energy from the flow of industrial water, chemical sewage or conventional sewage into electric energy;
(d) Transforming kinetic energy into electric energy from a liquid contained in a closed vessel and exposed to a source of accelerations and/or vibrations, such as when stored in a moving vehicle, such as a lorry.
